# EUROPÄISCHE PATENTSCHRIFT

(11) **EP 1 692 472 B1**
(45) Veröffentlichungstag und Bekanntmachung des Hinweises auf die Patenterteilung: **07.04.2010**
(21) Anmeldenummer: 04803765.9
(22) Anmeldetag: 09.12.2004
(51) Int. Cl.: G01G 1/00

(54) **GESTELL FÜR EINE KONTROLLWAAGE**
STAND FOR A CHECK WEIGHER
BATI D'UNE BALANCE DE CONTROLE

(30) Priorität: 11.12.2003 DE 10357982
(43) Veröffentlichungstag der Anmeldung: 23.08.2006
(73) Patentinhaber: Mettler-Toledo Garvens GmbH, 31180 Giesen (DE)
(72) Erfinder: BERGER, Hermann, 31079 Adenstedt (DE)
(74) Vertreter: Leinweber & Zimmermann
(86) Internationale Anmeldenummer: PCT/EP2004/014124
(87) Internationale Veröffentlichungsnummer: WO 2005/057144

(56) Entgegenhaltungen:
- WO-A-97/28073
- AU-B2- 469 535
- GB-A- 2 017 619
- US-A- 5 304 745
- JANA MEIER (MARKETING): "Garvens press texts for the IFFA 2004 trade fair: New hygiene standard with the GARVENS S3-SHARK" INTERNET ARTICLE, [Online] 20. Mai 2004 (2004-05-20), XP002323232 Gefunden im Internet: URL:http://www.garvens.de/pdf/Pressetext_S HARK_english.pdf>

## Beschreibung

Die Erfindung bezieht sich auf ein Gestell für eine Kontrollwaage, die eine an dem Gestell abgestützte Wägezelle und ein auf der Wägezelle abgestütztes, in einer Längsrichtung umlaufendes Wägeband zum Transport des Wägegutes aufweist, mit einem sich in der Längsrichtung erstreckenden Längsteil des Gestells, an dem mindestens ein sich quer zur Längsrichtung erstreckendes, der Abstützung des Gestells auf dem Boden dienendes Querteil des Gestells festgelegt ist.

Ein derartiges Gestell ist z.B. aus der US 5,304,745 bekannt.

Derartige Kontrollwaagen sind weithin bekannt. Sie dienen zur Überprüfung von Packungsgewichten, insbesondere in der pharmazeutischen Industrie und der Lebensmittelindustrie. Die zu überprüfenden Packungen werden auf einem Eingangstransportband zugeführt und von dort aus auf das Wägeband übergeben. Während sie das Wägeband durchlaufen, wird ihr Gewicht von der Wägezelle dynamisch erfaßt. Nach ihrem Durchlauf durch das Wägeband werden die Packungen von einem dem Wägeband nachgeschalteten Ausgangsband abtransportiert. Durch diese dynamische Wägung werden fehlgewichtige Packungen erkannt und von einer Schiebevorrichtung quer zu dem in der Längsrichtung stattfindenden Transport der Packungen ausgestoßen.

Bei diesem dynamischen Wägebetrieb werden insbesondere durch die Übergabe der einlaufenden Packungen vom Eingangsband auf das Wägeband und vom Wägeband auf das Ausgangsband Schwingungen angeregt. Eine weitere Quelle der Schwingungsanregung ist der Betrieb der Schiebevorrichtung. Daraus ergibt sich für das Gestell die Anforderung, diese unerwünschten Schwingungen möglichst stark zu unterdrücken. Ein anderes Problem besteht darin, daß Inhalte der zu wiegenden Packungen, die insbesondere flüssig, körnig oder pulverförmig sein können, durch nicht vermeidbare Unregelmäßigkeiten des Betriebs auf das Gestell gelangen können und dort liegenbleiben.

Die bekannten Gestelle stellen aufwendige Schweißkonstruktionen aus sich in der Längsrichtung und quer dazu erstreckenden Metallstreben dar. Sie sind hinsichtlich der für die Schwingungsunterdrückung notwendigen Stabilität verbesserungsbedürftig. Ferner sind sie gegen Verschmutzungen anfällig und schwer zu reinigen.

EP 1 558 508 B1 und US 4,146,126 offenbaren Gestelle mit einen Längsteil und Querteilen.

Der Erfindung liegt die Aufgabe zugrunde, ein Gestell der eingangs genannten Art zu schaffen, das einen verringerten baulichen Aufwand erfordert und gleichzeitig eine hohe Stabilität aufweist, wenig verschmutzungsanfällig und leicht zu reinigen ist.

Erfindungsgemäß wird diese Aufgabe durch ein Gestell gemäß Anspruch 1 gelöst.

Bei dieser erfindungsgemäßen Gestaltung des Gestells dient das Längsteil als tragendes Teil. Dieses kann derart biegesteif und torsionssteif ausgelegt werden, daß die für den jeweiligen Anwendungsfall erforderliche Stabilität erzielt wird. Beispielsweise läßt sich mit einem Rundrohr im Durchmesserbereich von 250-300 mm problemlos eine Länge des Gestells von 300 cm in seiner Längsrichtung verwirklichen. Die das Querteil bildende flache Platte weist trotz ihrer verhältnismäßig geringen Abmessung in ihrer zur Längsrichtung parallelen Dickenrichtung eine ausreichende Stabilität auf, weil die auf das tragende Längsteil des Gestells einwirkende Belastung von der flachen Platte im wesentlichen in der Richtung ihrer Hauptebene zu dem Boden hin, auf dem das Gestell aufgestellt ist, abgeleitet wird. Durch diese geringe Dicke ist der waagrecht verlaufende Oberflächenbereich des Querteils verschwindend klein. Damit entfällt im wesentlichen das Risiko von auf waagrechten Oberflächenbereichen liegenbleibenden Verschmutzungen. Insbesondere bleiben keine Flüssigkeiten liegen, sondern laufen zum Boden hin ab.

Die Anordnung ist auch in fertigungstechnischer Hinsicht äußerst vorteilhaft. Die kundenspezifischen Dimensionen des Gestells werden durch die Abmessungen des Längsteils und des Querteils bestimmt. Durch entsprechende Ablängung des Längsteils ergibt sich die Gestellabmessung in der horizontalen Richtung. Die Bauhöhe in der vertikalen Richtung läßt sich durch die Dimensionierung des Querteils bestimmen. Dieses kann beispielsweise durch Laserschneiden auf besonders einfache Weise aus einer Rohplatte herausgeschnitten werden. Die Plattenstärke kann beispielsweise unter 10 mm liegen, weil im wesentlichen nur vertikale Kräfte übertragen werden müssen.

Erfindungsgemäß ist vorgesehen, daß an den beiden Längsenden des Längsteils je eines der plattenförmigen Querteile angeordnet ist. Hierbei bilden die beiden plattenförmigen Querteile die vertikalen Kopfplatten des Gestells, zwischen denen sich das Längsteil erstreckt und an denen es mit seinen Längsenden, beispielsweise durch Schweißen, befestigt ist. An den beiden plattenförmigen Querteilen können zur Abstützung des Gestells auf dem Boden dienende Füße befestigt sein. Diese Füße können unmittelbar an dem Querteil anliegen oder von letzterem in der Längsrichtung beabstandet sein.

Weiter ist erfindungsgemäß vorgesehen, daß mindestens ein sich parallel zu dem Längsteil erstreckendes und an jedem der plattenförmigen Querteile festgelegtes weiteres Gestellteil vorgesehen ist. Insbesondere sind vier solche weiteren Gestellteile vorhanden, deren jedes im Bereich einer Ecke jedes der im wesentlichen rechteckig ausgebildeten plattenförmigen Querteile festgelegt ist. Jedes dieser weiteren Gestellteile kann zur Festlegung von Komponenten der Kontrollwaage dienen. Ferner können insbesondere zur weiteren Versteifung des Gestells in gewissen Abständen längs der Längsrichtung Querstege mit in der Längsrichtung geringer Dicke vorgesehen sein, die sowohl mit dem Längsteil als auch mit mindestens einem der weiteren Gestellteile verbunden sind. Der Querschnitt jedes der weiteren Gestellteile kann deutlich kleiner sein als der des Längsteils, dem in weit überwiegendem Maße die tragende und stabilisierende Funktion des Gestells zukommt.

Ein weiterer vorteilhafter Gesichtspunkt der Erfindung besteht darin, daß der Querschnitt des Längsteils und/oder jedes sich dazu parallel erstreckenden weiteren Gestellteils in seinem dem Boden abgewandten Bereich konvex geformt ist. Durch diese konvexe Ausbildung des nach oben weisenden Querschnittsbereichs treten keine nach oben gerichteten horizontalen Flächen auf, auf denen festes oder flüssiges Wiegegut liegenbleiben könnte. Vielmehr weisen dadurch das Längsteil und ggf. jedes sich dazu parallel erstrekkende weitere Gestellteil nach oben hin zur Horizontalen geneigte Oberflächen auf, von denen ggf. herabfallendes Wiegegut abrutscht oder abfließt. Diese Voraussetzungen sind insbesondere für kreisförmige Querschnitte erfüllt. Für rechteckige Querschnitte ist es zur Erfüllung dieser Voraussetzungen ausreichend, die Querschnittsdiagonale senkrecht zum Boden aufzurichten.

Im Rahmen der Erfindung ist auch vorgesehen, daß das Längsteil ein mit einer Einfüllöffnung für einen Ballaststoff versehenes Hohlrohr ist. Durch die Befüllung des Hohlrohrs mit dem Ballaststoff, der beispielsweise ein Schüttgut wie Kies sein kann, läßt sich die Gestellmasse erheblich steigern und dadurch ein entsprechend hohes Maß an Schwingungsunterdrückung erreichen. Geeignete Ballaststoffe wie Kies stehen üblicherweise sehr preisgünstig am Aufstellungsort des Gestells zur Verfügung. Gleichzeitig kann das Gestell im unbefüllten Zustand bei erheblich verringertem Gewicht viel leichter zu seinem Aufstellungsort transportiert werden. Als besonders günstig hat es sich erwiesen, wenn das Längsteil bzw. Hohlrohr mit einer Flüssigkeit, wie etwa Wasser, befüllt wird, wobei diese Flüssigkeit zum Erhalt gewünschter Eigenschaften mit einem Zusatzmittel, wie etwa einem Desinfektionsmittel, versetzt sein kann. Dabei kann die Befüllung mit der Flüssigkeit auch zusätzlich zur Schüttgutbefüllung erfolgen.

In diesem Zusammenhang ist es zweckmäßig, daß die Einfüllöffnung durch eine offene Stirnseite an einem Längsende des Hohlrohrs gebildet ist. Sofern das Längsende des Hohlrohrs mit dem plattenförmigen Querteil bündig ist, kann auf einfache Weise ein Verschlußdeckel für die Einfüllöffnung durch einen Schraubenkranz an dem plattenförmigen Querteil festgelegt werden.

In der folgenden Beschreibung sind Ausführungsformen der Erfindung unter Bezugnahme auf die Zeichnung näher erläutert. Hierin zeigen:
- Fig. 1: eine Ausführungsform eines erfindungsgemäßen Gestells in
(a) perspektivischer Ansicht
(b) seitlicher Aufsicht,
(c) stirnseitige Aufsicht, und
(d) Aufsicht von oben;
- Fig. 2: den Fig. 1 (a) bis 1 (d) entsprechende Ansichten des Gestells mit daran angeordneten Komponenten;
- Fig. 3: eine perspektivische Ansicht einer anderen Ausführungsform in einer Grundausstattung;
- Fig. 4: eine perspektivische Ansicht einer weiteren Ausführungsform in einer Grundausstattung;
- Fig. 5: einen an dem Gestell kraftschlüssig festlegbaren Träger in
(a) einer Aufsicht in Längsrichtung des Gestells,
(b) einer Aufsicht von oben, und
(c) einer Aufsicht quer zur Längsrichtung des Gestells;
- Fig. 6: eine andere Ausführungsform des Trägers in
(a) einer Aufsicht in der Längsrichtung des Gestells, und
(b) einer Aufsicht quer zur Längsrichtung des Gestells.

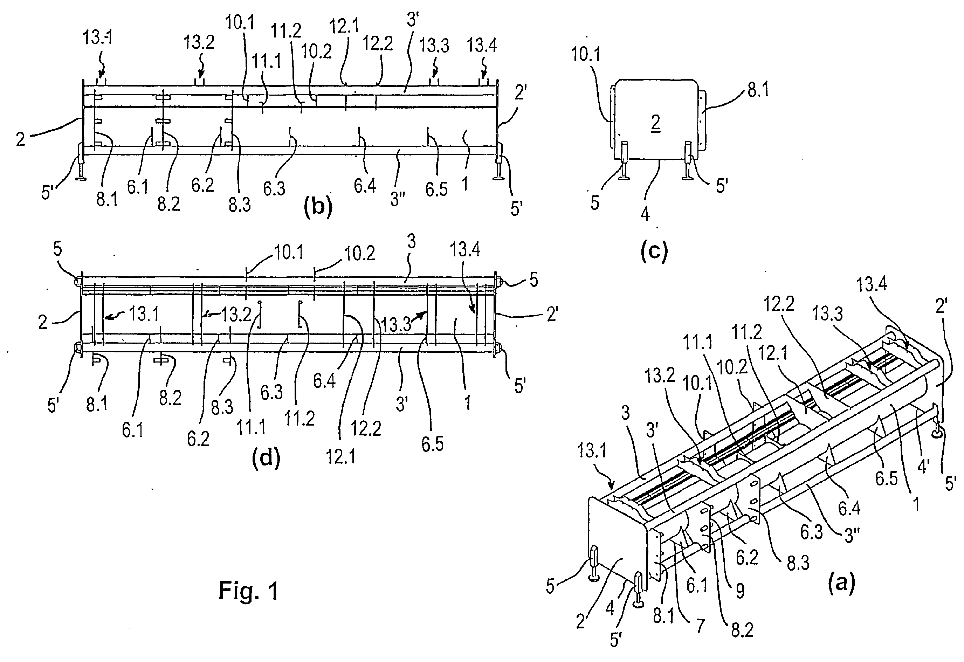

Ein in Fig. 1 in verschiedenen Ansichten dargestelltes Gestell weist als Längsteil ein zentrales zylindrisches Rohr 1 auf, dessen Zylinderachse eine Längsrichtung des Gestells bestimmt. Das Rohr 1 ist derart biege- und torsionssteif ausgebildet, daß es eine gewünschte Tragfähigkeit und Stabilität des Gestells sicherstellt. An den beiden Längsenden des Rohrs 1 ist jeweils ein im wesentlichen quadratisches Querteil 2, 2' angeschweißt, dessen Hauptebene sich quer zur Zylinderachse des Rohrs 1 erstreckt, wobei die Zylinderachse jeweils durch einen Mittenbereich der Querteile 2, 2' verläuft. Die Querteile 2, 2' sind aus einer im Vergleich zur Länge des zentralen Rohrs 1 sehr dünnen Blechplatte mit Hilfe eines Laserschneidstrahls herausgeschnitten.

In einem in bezug auf die Zylinderachse radialen Abstand von dem zentralen Rohr 1 erstrecken sich parallel zur Längsrichtung vier weitere Gestellteile, die jeweils mit ihren Längsenden auf die Querteile 2, 2' in deren Eckbereichen treffen und dort mit den Querteilen 2, 2' verschweißt sind. In Fig. 1 sind drei dieser weiteren Gestellteile sichtbar und mit den Bezugszeichen 3, 3', 3" bezeichnet. Die Sicht auf das vierte Gestellteil ist durch das zentrale Rohr 1 verstellt.

Die weiteren Gestellteile 3, 3', 3" sind ebenso wie das zentrale Rohr 1 durch zylindrische Rohre gebildet. Doch ist ihr Querschnitt jeweils wesentlich kleiner als der Querschnitt des zentralen Rohrs 1. Somit nimmt das zentrale Rohr 1 einen inneren kreisscheibenförmigen Bereich jedes der beiden plattenförmigen Querteile 2, 2' ein, während die vier weiteren Gestellteile 3, 3', 3" in dem diesen inneren Bereich umgebenden Randbereich der plattenförmigen Querteile 2, 2' mit den Querteilen zusammentreffen.

Zur Abstützung des Gestells auf dem Boden sind an jedem der beiden plattenförmigen Querteile 2, 2' in dessen an seine zum Boden weisende Außenkante 4 angrenzendem Bereich unter gegenseitigem Abstand zwei Füße 5, 5', beispielsweise durch Schweißen, befestigt. Die Füße 5, 5' sind höhenverstellbar ausgebildet, indem ihre zum Boden weisenden Teile mehr oder weniger tief in ihre an den Querteilen 2, 2' befestigten Teile eingeschraubt werden können.

Zwischen den plattenförmigen Querteilen 2, 2' sind fünf plattenförmige untere Querstege 6.1 bis 6.5 vorgesehen, die sich parallel zur Hauptebene der Querteile 2, 2' erstrekken und in der Längsrichtung unter gleichbleibendem gegenseitigen Abstand angeordnet sind. Denselben Abstand nehmen die den Querteilen 2, 2' unmittelbar benachbarten unteren Querstege 6.1 bzw. 6.5 zu den Querteilen 2, 2' ein. Die unteren Querstege 6.1 bis 6.5 sind an ihrem zum Boden weisenden Ende durch eine im wesentlichen gerade Kante 7 begrenzt, die sich zwischen den beiden dem Boden benachbarten Gestellteilen erstreckt, deren eines in Fig. 1 unter dem Bezugszeichen 3" sichtbar ist. Mit diesen beiden Gestellteilen sind die unteren Querstege 6.1 bis 6.5 jeweils, beispielsweise durch Schweißen, verbunden. Das der Kante 7 entgegengesetzte Ende der unteren Querstege 6.1 bis 6.5 ist komplementär zu dem Querschnitt des zentralen Rohrs 1 etwa halbkreisförmig ausgenommen und mit dem zentralen Rohr 1 über die Länge dieser Ausnehmung verschweißt. Durch diese Anordnung wirken die unteren Querstege 6.1 bis 6.5 als zusätzliche Versteifung des Gestells.

Zwischen den in bezug auf den Boden vertikal übereinanderliegenden weiteren Gestellteilen 3', 3" erstrecken sich drei Halteplatten 8.1 bis 8.3. Diese Halteplatten weisen ebenfalls in der Längsrichtung nur eine sehr geringe Dicke auf und verlaufen parallel zur Hauptebene der Querteile 2, 2'. Die in bezug auf das Gestell nach außen weisende vertikale Außenkante 9 jeder Halteplatte 8.1 bis 8.3 ist gerade geformt. In ihrem der Außenkante 9 horizontal gegenüberliegenden Bereich ist jede der Halteplatten 8.1 bis 8.3 dem Querschnitt des zentralen Rohrs 1 folgend kreisbogenförmig ausgenommen und mit dem zentralen Rohr 1 beispielsweise durch Schweißen verbunden. Entsprechende Verbindungen bestehen zwischen jeder der Halteplatten 8.1 bis 8.3 und den beiden Gestellteilen 3', 3".

Ein den Halteplatten 8.1 bis 8.3 ähnliches Paar von Halteplatten 10.1, 10.2 ist auf der den Halteplatten 8.1 bis 8.3 horizontal entgegengesetzten Seite des Gestells vorgesehen. Die Halteplatten 10.1, 10.2 sind mit dem oberen Gestellteil 3 und dem in Fig. 1 nicht sichtbaren unteren Gestellteil sowie mit dem zentralen Rohr 1 auf ähnliche Weise verbunden wie die Halteplatten 8.1 bis 8.3.

Im Bereich der Längsmitte des Gestells ist auf der dem Boden entgegengesetzten Oberseite des zentralen Rohrs 1 ein Paar von Haltestegen 11.1, 11.2 angeordnet, die sich parallel zur Hauptebene der Querteile 2, 2' erstrecken. Sie sind an ihrer zum zentralen Rohr 1 weisenden Seite komplementär zum Querschnitt des zentralen Rohrs 1 kreisbogenförmig ausgenommen und längs dieser Ausnehmung mit dem zentralen Rohr 1 verschweißt. Ihr dazu entgegengesetztes Ende ist gerade ausgebildet und verläuft horizontal.

In bezug auf die Längsrichtung seitlich der Haltestege 11.1, 11.2 erstreckt sich parallel zur Hauptebene der Querteile 2, 2' ein Paar von oberen Querstegen 12.1, 12.2, die in bezug auf die Zylinderachse des zentralen Rohrs 1 im wesentlichen spiegelsymmetrisch zu den unteren Querstegen 6.1 bis 6.5 geformt und in analoger Weise wie diese an dem zentralen Rohr 1 und den beiden oberen Gestellteilen 3, 3' festgelegt sind.

Weiterhin erstrecken sich zwischen den beiden oberen Gestellteilen 3, 3' parallel zur Hauptebene der plattenförmigen Querteile 2, 2' insgesamt vier Träger 13.1 bis 13.4, deren Konstruktion und Festlegung an den Gestellteilen 3, 3' noch genauer beschrieben werden wird.

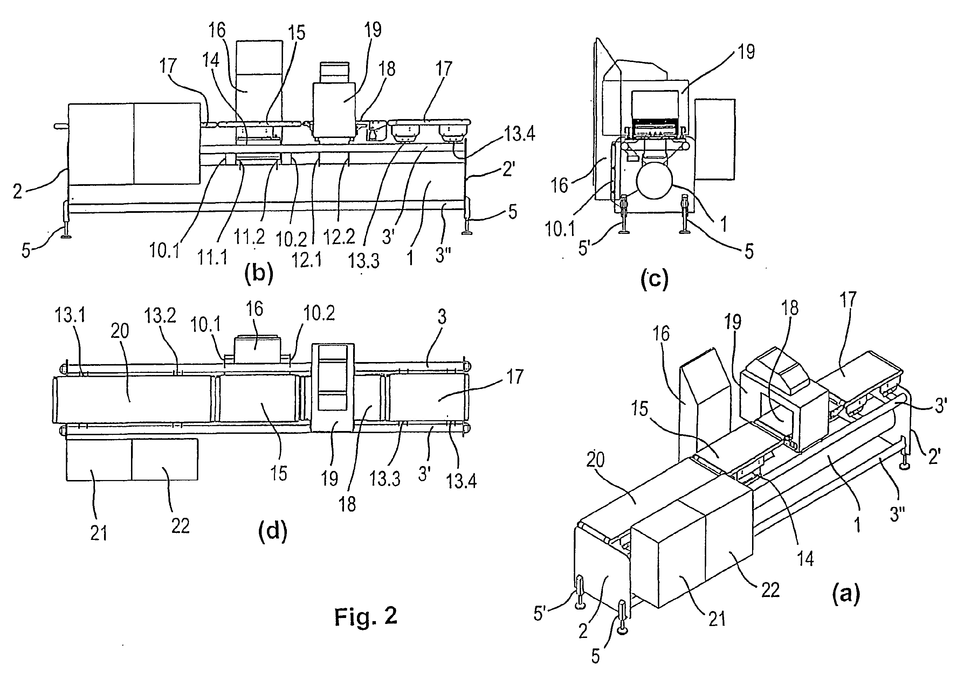

In Fig. 2 ist das in Fig. 1 dargestellte Gestell mit folgenden Komponenten bestückt: Auf den Haltestegen 11.1, 11.2 ist eine Wägezelle 14 montiert, auf der ein in der Längsrichtung umlaufendes Wägeband 15 abgestützt ist. Die Wägezelle 14 ist an eine Steuer- und Auswerteeinrichtung angeschlossen, die den Betrieb als Kontrollwaage unterstützt. Diese Steuer- und Auswerteeinrichtung ist in einem Gehäuse 16 untergebracht, das an den seitlichen Halteplatten 10.1, 10.2 befestigt ist.

Bei dem Kontrollwaagenbetrieb werden Packungen auf das Wägeband 15 aufgegeben und während ihres Durchlaufs durch das Wägeband 15, dessen Transportrichtung in den Ansichten von Fig. 2 von rechts nach links verläuft, mittels der Wägezelle 14 dynamisch gewogen. Die Zufuhr der Packungen erfolgt über ein dem Wägeband 15 in bezug auf die Laufrichtung vorgeschaltetes Eingangsband 17. Dieses ist auf den beiden Trägern 13.3 und 13.4 montiert. Das Auslaufende des Eingangsbandes 17 grenzt an das Einlaufende eines ebenfalls in der Längsrichtung umlaufenden Transportbandes 18 eines tunnelartig ausgebildeten Metalldetektors 19 an. Auf diese Weise übernimmt das Transportband 18 die von dem Eingangsband 17 zugeführten Packungen und führt sie durch den Metalldetektor 19 hindurch zum Auslaufende des Transportbandes 18. Letzteres grenzt an das Einlaufende des Wägebandes 15 an und übergibt dadurch die Packungen auf das Wägeband 15. Dieser Metalldetektor 19 ist an den oberen Querstegen 12.1, 12.2 montiert.

An das Auslaufende des Wägebands 15 grenzt das Eingangsende eines Ausgangsbandes 20 an, das die gewogenen Packungen von dem Wägeband 15 übernimmt und in der Längsrichtung abfördert. Das Ausgangsband 20 ist an den Trägern 13.1 und 13.2 abgestützt.

Entlang dem Ausgangsband 20 sind zwischen den seitlichen Halteplatten 8.1 und 8.2 bzw. 8.2 und 8.3 zwei Auswurfbehälter 21, 22 festgelegt. In diese Auswurfbehälter werden mit Hilfe von nicht dargestellten Schiebeeinrichtungen, die quer zur Transportrichtung des Ausgangsbandes 20 wirksam sind und die von der in dem Gehäuse 16 angeordneten Steuer- und Auswerteeinrichtung gesteuert werden, solche Packungen ausgeworfen, für die der Metalldetektor 19 angesprochen hat oder die als Ergebnis der dynamischen Wägung mittels der Wägezelle 14 als fehlgewichtig erkannt wurden.

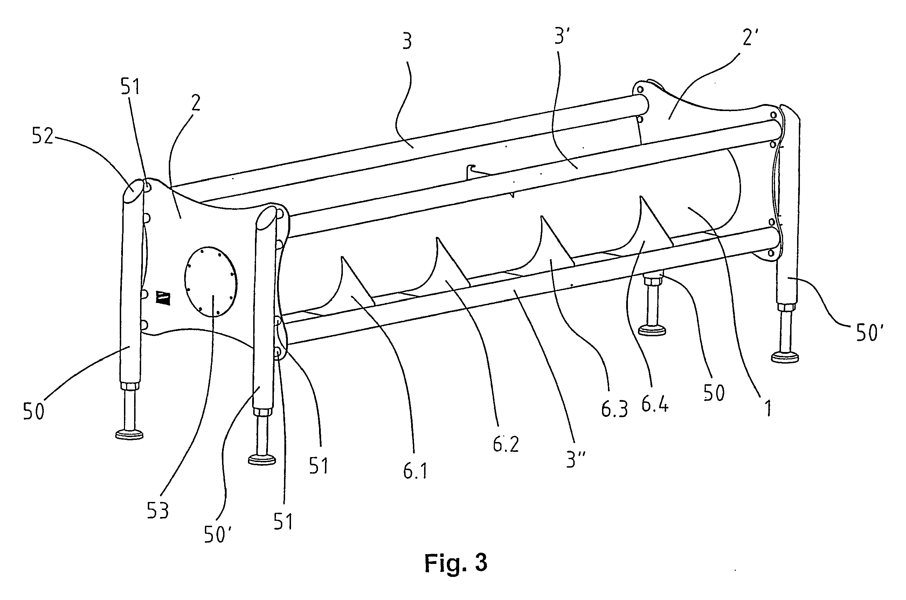

Die in Fig. 3 dargestellte Ausführungsform des Gestells weicht von der in den Fig. 1 und 2 dargestellten Ausführungsform dadurch ab, daß in Fig. 3 die Füße 50, 50' in bezug auf die Längsrichtung des Gestells in einem kleinen Abstand vor dessen plattenförmigen Querteilen 2, 2' angeordnet sind. Dieser Abstand wird durch Distanzelemente 51 eingestellt, die sich zwischen den jeweiligen Füßen 50, 50' und den jeweiligen Querteilen 2, 2' in der Längsrichtung des Gestells erstrecken. Ein weiterer Unterschied besteht darin, daß die Füße 50, 50' sich säulenförmig im wesentlichen über die gesamte vertikale Höhe der Querteile 2, 2' erstrecken.

Im übrigen kann das in Fig. 3 dargestellte Gestell alle in den Fig. 1 und 2 dargestellten Ausbauelemente enthalten. In dem in Fig. 3 dargestellten Ausbauzustand sind die auch in der Ausführungsform von Fig. 1 und 2 vorhandenen weiteren Gestellteile 3, 3' und 3" erkennbar. Weiter zeigt Fig. 3 die auch in Fig. 1 und 2 vorhandenen unteren Querstege 6.1 bis 6.4, die nur hinsichtlich ihrer Anzahl von den Fig. 1 und 2 abweichen. Im Vergleich zu Fig. 1 und 2 sind in Fig. 3 die Ränder der Querteile 2, 2' von den Ecken aus bogenförmig geringfügig einwärts verlaufend geformt. Die Befestigung der Füße 50, 50' an den Querteilen 2, 2' liegt im Bereich der Ecken. Die oberen Enden 52 der Füße 50, 50' sind als gegenüber der Horizontalen geneigte Flächen ausgebildet, damit auch dort keine Ablagerungen liegenbleiben können.

Außerdem ist in Fig. 3 an dem plattenförmigen Querteil 2 ein kreisscheibenförmiger Deckel 53 erkennbar. Dieser verschließt die in dem Querteil 2 ausgenommene offene Stirnseite des das Längsteil bildenden hohlen Rohrs 1. Der Deckel 53 ist durch einen peripheren Schraubenkranz auf dem Querteil 2 festgespannt und kann durch Lösen dieser Schrauben abgenommen werden. Dann kann in das an seiner Stirnseite offene zentrale Rohr 1 ein Ballaststoff, beispielsweise Kies, eingefüllt und der Deckel wieder verschlossen werden. Das ballastbeladene Gestell bewirkt aufgrund seiner dadurch erhöhten Masse eine entsprechend höhere Schwingungsdämpfung.

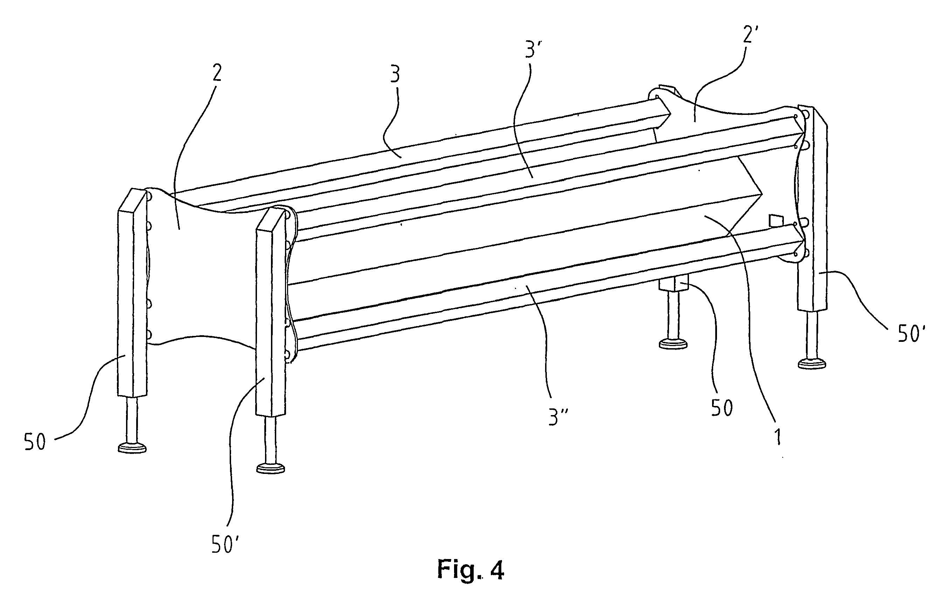

Die in Fig. 4 dargestellte Ausführungsform des Gestells entspricht der in Fig. 3 dargestellten Ausführungsform mit der Ausnahme, daß abweichend von den kreisförmigen Querschnitten des zentralen Rohrs 1, der Gestellteile 3, 3', 3" und der Füße 5, 5' in Fig. 3 diese Teile in Fig. 4 einen quadratischen oder rechteckigen Querschnitt aufweisen. Um auch in diesem Fall die Ansammlung von Ablagerungen zu vermeiden, sind das zentrale Rohr 1 und die Gestellteile 3, 3', 3" derart ausgerichtet, daß die Diagonalen ihrer quadratischen oder rechteckigen Querschnitte vertikal, d. h. senkrecht zum Boden, ausgerichtet sind.

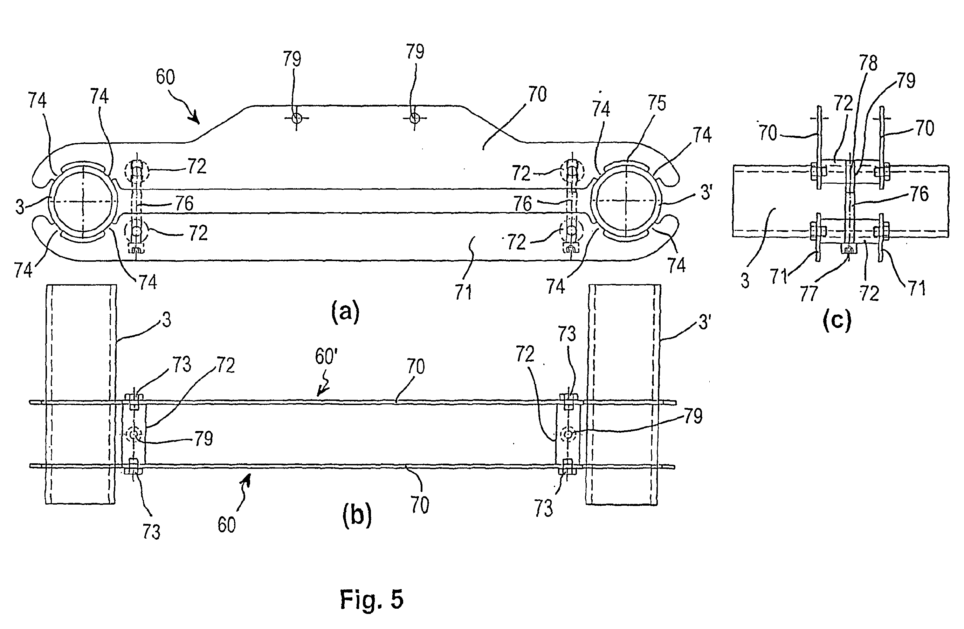

In Fig. 5 ist eine Ausführungsform der in den Fig. 1 und 2 nur schematisch angedeuteten Träger 13.1 bis 13.4 dargestellt. Die in der Längsrichtung des Gestells gesehene Ansicht von Fig. 5 (a) und die obere Aufsicht von Fig. 5 (b) zeigen die beiden oberen Gestellteile 3, 3' und den daran kraftschlüssig festgelegten Träger. Letzterer weist gemäß Fig. 5 (b) zwei Elemente 60, 60' auf, deren jedes in zwei Teile 70, 71 unterteilt ist. Alle diese Teile sind in der Form einer flachen Platte ausgebildet. Die Hauptebenen der Teile 70, 71 des Elements 60 und der Teile 70, 71 des Elements 60' sind in der Längsrichtung des Gestells voneinander beabstandet und erstrecken sich quer zur Längsrichtung. Dabei fluchten jeweils die beiden Teile 70 der Elemente 60, 60' in der Längsrichtung miteinander, ebenso wie die beiden Teile 71 der Elemente 60, 60'. Zwischen den miteinander fluchtenden Teilen 70 und den miteinander fluchtenden Teilen 71 erstreckt sich nahe den Gestellteilen 3, 3' in der Längsrichtung jeweils ein Widerlagerelement 72, das an seinen Enden an den jeweils miteinander fluchtenden Teilen 70 bzw. 71 mit Schraubbolzen 73 befestigt ist.

In jedem der beiden Elemente 60, 60' umgreifen die jeweiligen Teile 70, 71 das betreffende Gestellteil 3, 3' an in der Querrichtung einander entgegengesetzten Bereichen und stützen sich auf dem betreffenden Gestellteil 3, 3' mit zu dessen Querschnitt komplementär geformten Bereichen 74 ab. In Fig. 5 (a) weist jedes der Teile 70, 71 an jedem seiner ein Gestellteil 3, 3' übergreifenden Bereiche zwei der zu dem Querschnitt des Gestellteils 3, 3' komplementär geformten Bereiche 74 auf, die durch eine dazwischenliegende Ausnehmung 75 voneinander getrennt sind.

Zwischen den beiden in der Nähe des betreffenden Gestellteils 3, 3' einander gegenüberliegenden Widerlagerelementen 72 der einander gegenüberliegenden Teile 70, 71 erstreckt sich ein Spannelement in der Form eines Schraubbolzens 76. Aus den Fig. 5 (a) und 5 (c) ist deutlich erkennbar, daß der Schaft dieses Schraubbolzens 76 durch eine radiale Bohrung eines der beiden bolzenförmig ausgebildeten Widerlagerelemente 72 hindurchgeführt ist und an diesem mit seinem Kopf 77 abgestützt ist. Das dem Kopf 77 entgegengesetzte Ende des Schafts ist mit einem Schraubgewinde 78 versehen und in eine radiale Gewindebohrung des gegenüberliegenden bolzenförmigen Widerlagerelements 72 eingeschraubt. Dadurch werden die beiden Elemente 60, 60' zusammengespannt und kraftschlüssig an dem betreffenden Gestellteil 3, 3' festgeklemmt.

In den in Fig. 5 (a) oberen Teilen 70 der Elemente 60, 60' sind Montagelöcher 79 ausgebildet. Diese sind auch in Fig. 1 (a) an den Trägern 13.1 bis 13.4 angedeutet. Sie dienen zur Montage des in Fig. 2 ersichtlichen Eingangsbandes 17 bzw. des Ausgangsbandes 20.

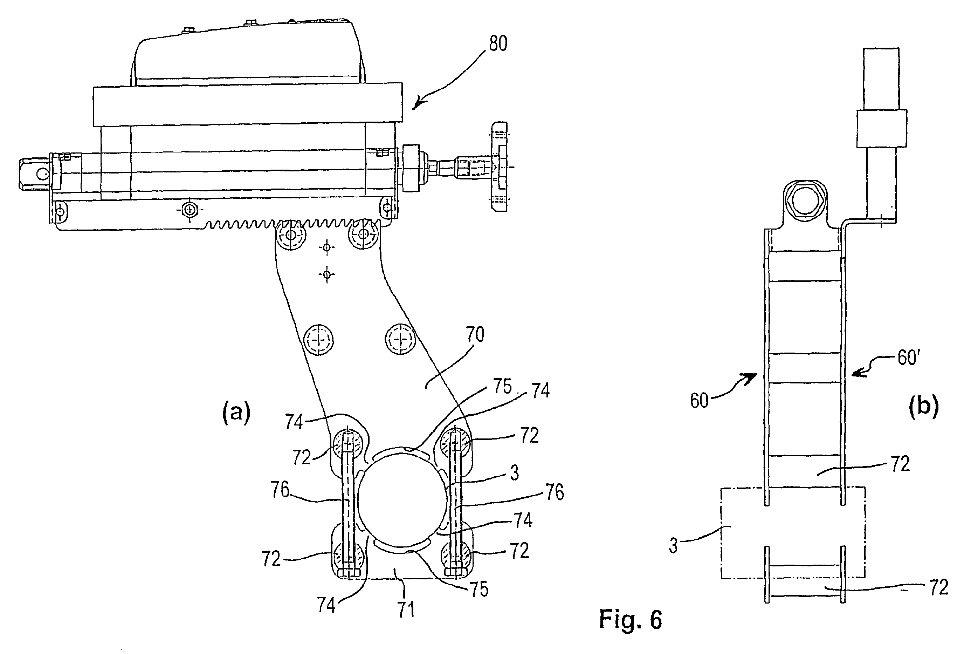

Die in Fig. 5 dargestellte Ausführungsform des Trägers ist an ihrem einen Ende an dem Gestellteil 3 und an ihrem anderen Ende an dem Gestellteil 3' festgeklemmt. Hierbei genügt es, in der Nähe dieser beiden Klemmungen jeweils ein einziges Paar von Widerlagerelementen 72 und ein einziges sie zusammenspannendes Spannelement vorzusehen. Hiervon unterscheidet sich die in Fig. 6 (a) und 6 (b) dargestellte Ausführungsform des Trägers dadurch, daß die kraftschlüssige Verbindung mit dem Gestellteil 3 nur an einem Ende des Trägers erfolgt. Sein anderes Ende ragt frei über dem Gestellteil 3 empor und dient zur Montage der weiter oben erwähnten, jedoch nicht dargestellten Schiebevorrichtung, die quer zu dem in Fig. 2 dargestellten Ausgangsband 20 wirkt und fehlerhafte Pakkungen in Richtung der Auswurfbehälter 21, 22 ausstößt. Ein Teil dieser Schiebevorrichtung, deren Aufbau für die Zwecke der vorliegenden Anmeldung nicht interessiert, ist in Fig. 6 (a) unter dem Bezugszeichen 80 schematisch angedeutet.

In Fig. 6 (a) und 6 (b) sind die den Elementen 60, 60' und ihren jeweiligen Teilen 70, 71 entsprechenden Teile mit denselben Bezugszeichen bezeichnet. Insoweit wird auf die diesbezügliche Beschreibung von Fig. 5 verwiesen. Ferner sind in Fig. 6 zwei Paare von jeweils durch einen Schraubbolzen 76 zusammengespannten Widerlagerelementen 72 erkennbar. Jedes dieser Paare von Widerlagerelementen 72 und Schraubbolzen 76 entspricht der betreffenden Beschreibung von Fig. 5. Fig. 6 unterscheidet sich von Fig. 5 insoweit lediglich dadurch, daß nicht nur wie in Fig. 5 auf einer Seite des jeweiligen Gestellteils 3 bzw. 3' ein solches Paar von durch den Schraubbolzen 76 zusammengespannten Widerlagerelementen 72 vorgesehen ist, sondern auf der gegenüberliegenden Seite des betreffenden Gestellteils 3 ein ebensolches Paar von Widerlagerelementen 72 und ein diese Widerlagerelemente zusammenspannender Schraubbolzen 76 für einen festen Sitz der Klemmverbindung sorgt.

### Verzeichnis der Bezugszeichen

- 1: zentrales Rohr
- 2, 2': Querteil
- 3, 3', 3": Gestellteil
- 4, 4': Außenkante
- 5, 5': Füße
- 6.1-6.5: untere Querstege
- 7: Kante
- 8.1-8.3: Halteplatten
- 9: Außenkante
- 10.1, 10.2: Halteplatten
- 11.1, 11.2: Haltesteg
- 12.1, 12.2: obere Querstege
- 13.1-13.4: Träger
- 14: Wägezelle
- 15: Wägeband
- 16: Gehäuse
- 17: Eingangsband
- 18: Transportband
- 19: Metalldetektor
- 20: Ausgangsband
- 21,22: Auswurfbehälter
- 50, 50': Füße
- 51: Distanzelemente
- 52: oberes Ende
- 53: Deckel
- 60, 60': Elemente
- 70, 71: Teile
- 72: Widerlagerelement
- 73: Schraubbolzen
- 74: Bereich
- 75: Ausnehmung
- 76: Schraubbolzen
- 77: Kopf
- 78: Schraubgewinde
- 79: Montagelöcher
- 80: Schiebevorrichtung

## Patentansprüche

1. Gestell für eine Kontrollwaage, die eine an dem Gestell abgestützte Wägezelle (14) und ein auf der Wägezelle (14) abgestütztes, in einer Längsrichtung umlaufendes Wägeband (15) zum Transport des Wägegutes aufweist, mit einem sich in der Längsrichtung erstreckenden Längsteil (1) als tragendes Teil und mit sich quer zur Längsrichtung erstreckenden, der Abstützung des Gestells auf dem Boden dienenden Querteilen (2, 2'), die an dem Längsteil (1) festgelegt sind, **dadurch gekennzeichnet, dass**
an beiden Längsenden des Längsteils (1) je eines der plattenförmigen Querteile (2, 2') angeordnet ist, mindestens ein sich parallel zu dem Längsteil (1) erstreckendes und an jedem der plattenförmigen Querteile (2, 2') festgelegtes weiteres Gestellteil (3, 3', 3") vorgesehen ist, zur Festlegung von Komponenten der Kontrollwaage, und dass die Querteile (2, 2') in der Form einer flachen Platte ausgebildet sind, deren Hauptebene sich quer zur Längsrichtung erstreckt.

2. Gestell nach Anspruch 1, **dadurch gekennzeichnet, dass** jedes der weiteren Gestellteile (3, 3', 3") einen kleineren Querschnitt als das Längsteil (1) aufweist.

3. Gestell nach Anspruch 1 oder 2, **dadurch gekennzeichnet, dass** jedes der plattenförmigen Querteile (2, 2') eine im wesentlichen rechteckige Grundform aufweist.

4. Gestell nach Anspruch 1 oder 2, **dadurch gekennzeichnet, dass** das Längsteil (1) an einem inneren Bereich jedes plattenförmigen Querteils (2, 2') und jedes sich parallel dazu erstreckende weitere Gestellteil (3, 3', 3") an einem den inneren Bereich umgebenden Randbereich des plattenförmigen Querteils (2, 2') angeordnet ist.

5. Gestell nach einem der Ansprüche 1 bis 4, **dadurch gekennzeichnet, dass** das Längsteil (1) ein biegesteifes Rohr ist.

6. Gestell nach einem der Ansprüche 1 bis 5, **dadurch gekennzeichnet, dass** der Querschnitt des Längsteils (1) und/oder jedes sich dazu parallel erstreckende weitere Gestellteil (3, 3', 3") in seinem dem Boden abgewandten Bereich konvex geformt ist.

7. Gestell nach einem der Ansprüche 1 bis 6, **dadurch gekennzeichnet, dass** das Längsteil (1) ein mit einer Einfüllöffnung (53) für einen Ballaststoff versehenes Hohlrohr ist.

8. Gestell nach Anspruch 7, **dadurch gekennzeichnet, dass** die Einfüllöffnung (53) durch eine offene Stirnseite an einem Längsende des Hohlrohrs (1) gebildet ist.

9. Gestell nach einem der Ansprüche 1 bis 8, **dadurch gekennzeichnet, dass** an dem plattenförmigen Querteil (2, 2') zur Abstützung des Gestells auf dem Boden dienende Füße (5, 5'; 50, 50') befestigt sind.

10. Gestell nach Anspruch 9, **dadurch gekennzeichnet, dass** die Füße (50, 50') von dem plattenförmigen Querteil (2, 2') in der Längsrichtung beabstandet sind.

## Claims

1. A stand for a check weigher which has a weighing cell (14) supported on the stand and a weighing belt (15) supported on the weighing cell (14) and circulating in a longitudinal direction for conveying the item being weighed, having a longitudinal part (1) extending in the longitudinal direction as a carrying part and having lateral parts (2, 2') extending laterally to the longitudinal direction serving to support the stand on the ground and which are fixed to the longitudinal part (1), **characterised in that**
one of the plate-shaped lateral parts (2, 2') is respectively disposed on both longitudinal ends of the longitudinal part (1), at least one further stand part (3, 3', 3") extending parallel to the longitudinal part (1) and fixed onto each of the plate-shaped lateral parts (2, 2') is provided in order to secure components of the check weigher, and that the lateral parts (2, 2') are designed in the form of a flat plate the main plane of which extends laterally to the longitudinal direction.

2. The stand according to Claim 1, **characterised in that** each of the further stand parts (3, 3', 3") has a smaller cross-section than the longitudinal part (1).

3. The stand according to Claim 1 or 2, **characterised in that** each of the plate-shaped lateral parts (2, 2') has a substantially rectangular basic shape.

4. The stand according to Claim 1 or 2, **characterised in that** the longitudinal part (1) is disposed on an inner region of each plate-shaped lateral part (2, 2'), and each further stand part (3, 3', 3") extending parallel to the latter is disposed on a peripheral region of the plate-shaped lateral part (2, 2') surrounding the inner region.

5. The stand according to any of Claims 1 to 4, **characterised in that** the longitudinal part (1) is a bend-proof tube.

6. The stand according to any of Claims 1 to 5, **characterised in that** the cross-section of the longitudinal part (1) and/or every further stand part (3, 3', 3") extending parallel to the latter is convex in form in its region facing away from the ground.

7. The stand according to any of Claims 1 to 6, **characterised in that** the longitudinal part (1) is a hollow tube provided with a filler opening (53) for a bulk material.

8. The stand according to Claim 7, **characterised in that** the filler opening (53) is formed by an open face side on a longitudinal end of the hollow tube (1).

9. The stand according to any of Claims 1 to 8, **characterised in that** feet (5, 5'; 50, 50') serving to support the stand on the ground are fastened onto the plate-shaped lateral part (2, 2').

10. The stand according to Claim 9, **characterised in that** the feet (50, 50') are spaced apart from the plate-shaped lateral part (2, 2') in the longitudinal direction.

## Revendications

1. Bâti pour une balance de contrôle comprenant une cellule de pesage (14) en appui sur le bâti et une bande de pesage (15) en appui sur la cellule de pesage (14) et tournant dans un sens longitudinal afin de transporter le produit à peser, lequel bâti comprend un élément longitudinal (1) ayant fonction d'élément porteur se prolongeant dans le sens longitudinal ainsi que des éléments transversaux (2, 2') se prolongeant transversalement au sens longitudinal, fixés à l'élément longitudinal (1) et permettant l'appui du bâti au sol, **caractérisé en ce que**
un élément transversal en forme de plaque (2, 2') est respectivement agencé à chacune des deux extrémités longitudinales de l'élément longitudinal (1), il est prévu au moins un élément de bâti supplémentaire (3, 3', 3") se prolongeant parallèlement à l'élément longitudinal (1) en étant fixé à chacun des éléments transversaux en forme de plaques (2, 2'), lequel est destiné à la fixation de composants de la balance de contrôle, et **en ce que** les éléments transversaux (2, 2') sont réalisés sous la forme d'une plaque plate dont le plan principal se prolonge transversalement au sens longitudinal.

2. Bâti selon la revendication 1, **caractérisé en ce que** chacun des éléments de bâti supplémentaires (3, 3', 3 ") présente une section transversale plus petite que l'élément longitudinal (1).

3. Bâti selon la revendication 1 ou 2, **caractérisé en ce que** chacun des éléments transversaux en forme de plaques (2, 2') présente une forme de base essentiellement rectangulaire.

4. Bâti selon la revendication 1 ou 2, **caractérisé en ce que** l'élément longitudinal (1) est agencé au niveau d'une zone intérieure de chacun des éléments transversaux en forme de plaques (2, 2') et chacun des éléments de bâti supplémentaires (3, 3', 3") parallèles à celui-ci est agencé au niveau d'une zone périphérique de l'élément transversal en forme de plaque (2, 2') entourant ladite zone intérieure.

5. Bâti selon l'une des revendications 1 à 4, **caractérisé en ce que** l'élément longitudinal (1) est un tube rigide en flexion.

6. Bâti selon l'une des revendications 1 à 5, **caractérisé en ce que** la section transversale de l'élément longitudinal (1) et/ou chacun des éléments de bâti supplémentaires (3, 3', 3") parallèles à ce dernier présente une forme convexe dans sa partie éloignée du sol.

7. Bâti selon l'une des revendications 1 à 6, **caractérisé en ce que** l'élément longitudinal (1) consiste en un tube creux pourvu d'une ouverture de remplissage (53) destinée à une matière de ballast.

8. Bâti selon la revendication 7, **caractérisé en ce que** l'ouverture de remplissage (53) est réalisée dans un côté frontal ouvert situé sur une extrémité longitudinale du tube creux (1).

9. Bâti selon l'une des revendications 1 à 8, **caractérisé en ce que** des pieds (5, 5' ; 50, 50') sont fixés à l'élément transversal en forme de plaque (2, 2') pour permettre l'appui du bâti au sol.

10. Bâti selon la revendication 9, **caractérisé en ce que** les pieds (50, 50') sont espacés de l'élément transversal en forme de plaque (2, 2') dans le sens longitudinal.
